# EUROPÄISCHE PATENTSCHRIFT

(11) **EP 2 607 048 B1**
(45) Veröffentlichungstag und Bekanntmachung des Hinweises auf die Patenterteilung: **23.10.2019**
(21) Anmeldenummer: 12008344.9
(22) Anmeldetag: 14.12.2012
(51) Int. Cl.: B29C 45/83, F16H 25/22, F16C 33/66, F16C 33/72, F16H 57/04, F16N 7/40, F16N 39/00, F16C 33/10

(54) **SPRITZGIESSMASCHINE ZUR VERARBEITUNG VON KUNSTSTOFFEN**
INJECTION MOULDING MACHINE FOR PROCESSING PLASTICS
MACHINE DE MOULAGE PAR INJECTION POUR LE TRAITEMENT DE MATIÈRES PLASTIQUES

(30) Priorität: 19.12.2011 DE 102011121336
(43) Veröffentlichungstag der Anmeldung: 26.06.2013
(73) Patentinhaber: Arburg GmbH + Co KG, 72290 Lossburg (DE)
(72) Erfinder: Kraibühler, Herbert, 72290 Lossburg (DE); Duffner, Eberhard, Dr., 72181 Starzach (DE)
(74) Vertreter: Reinhardt, Harry

(56) Entgegenhaltungen:
- WO-A1-2011/074170
- DE-A1- 19 542 453
- DE-A1- 19 831 483
- GB-A- 572 182
- JP-A- H11 198 206
- JP-A- H11 333 897
- JP-U- S61 155 112
- US-A- 572 182
- US-A- 2 299 119

## Beschreibung

### Gebiet der Erfindung

Die Erfindung betrifft eine Spritzgießmaschine zur Verarbeitung von Kunststoffen und anderen plastifizierbaren Materialien mit wenigstens einer Schmierstelle nach dem Oberbegriff des Anspruches 1.

### Stand der Technik

Aus der dem Oberbegriff des Anspruches 1 zugrundeliegenden JP H11 333897 A ist es bekannt, einen elektrischen Spindelantrieb für den Schließmechanismus an einer Spritzgießmaschine so abzukapseln, dass bei der Rotation der Spindel umhergeschleudertes Schmiermittel aufgefangen werden kann. Von dort wird es über eine Absaugvorrichtung abgeführt. Die JP S61 155112 U offenbart die Zufuhr und Abfuhr von herausgedrücktem Schmiermittel an einem Kniehebel einer Spritzgießmaschine. Die US 2 299 119 A und GB 572 182 A offenbaren Lagerschmierungen, wobei Schmiermittel in die Schmierstelle zugeführt wird und von außen eindringender Schmutz und/oder aus der Schmierstelle austretendes Schmiermittel abgesaugt wird. Die DE 198 31 483 A1 offenbart eine Spritzgießmaschine mit einem Schmiermittelkreislauf.

Aus der DE 10 2004 042 744 A1 ist eine Spritzgießmaschine zur Bearbeitung von Kunststoffen und anderen plastifizierbaren Materialien wie pulverförmige, metallische oder keramische Massen mit einer nicht dargestellten Spritzgießeinheit und einer Formschließeinheit bekannt. An der Formschließeinheit ist ein Kniehebelmechanismus vorgesehen, während offenbleibt, wie die Spritzgießeinheit aufgebaut ist. Kniehebelmechanismen sind an und für sich sehr gut für den Betrieb von Spritzgießmaschinen geeignet, weil sie einerseits eine schnelle Formschlussbewegung ermöglichen, andererseits im Bereich des Totpunktes des Kniehebelmechanismus hohe Kräfte zur Verfügung stehen. Eine Schmiermittelversorgung versorgt sowohl die Gelenke eines Kniehebels als auch einen Spindelantrieb mit Spindel und Spindelmutter mit Schmiermittel n. Das den Gelenken des Kniehebels zugeführte Schmiermittel verbleibt an den Gelenken, während hinsichtlich des Spindelantriebes ein Auffangbehälter und eine Rückführung des Schmiermittels in einen Sammelbehälter vorgesehen ist.

Vergleichbare Schmierstellen liegen auch an anderer Stelle einer Spritzgießmaschine vor, insbesondere, wenn formschließseitig oder spritzgießseitig elektromechanische Spindelantriebe oder grundsätzlich mechanische Antriebe verwendet werden. Eine derartige Antriebseinheit ist z.B. aus der DE 10 2008 051 285 B3 bekannt, in der eine Flüssigkeitskühlung mit Kühlkanälen an der Lagerstelle des Spindelantriebes vorgesehen ist.

Bisher werden die mechanischen Gelenke von Kniehebelmechanismen geschmiert, wobei beim Betrieb überschüssiges Schmieröl unkontrolliert austreten kann. Daher wird bei Kniehebeln grundsätzlich der Weg gewählt, die Gelenkbereiche entsprechend abzudichten, um ein Austreten von Schmieröl nach Möglichkeit zu verhindern. Dies hat sich in der Praxis als unzureichend erwiesen.

Aus der JP 2010/052141 A ist ein Schmiermittelkreislauf für eine Schmierstelle an Führungsholmen bekannt, wobei stets eine innere und eine äußere Dichtung vorgesehen sind. In Absatz (0010) dieser Schrift wird zudem auf einen Stand der Technik verwiesen, bei dem eine Schmiermittelfangfurche vorgesehen ist. Austretendes Schmiermittel wird also über diese Rille wieder abgeführt.

In der WO 2005/077639 A1 wird ein geschlossener Schmiermittelkreislauf vorgeschlagen, der dort, Seite 8 unten bis Seite 9 oben so ausgebildet ist, dass Öl nirgends mit Luft in Berührung kommt, wobei die Pumpe einen genügenden Überdruck aufrecht erhalten muss, sodass auch in der Rückführleitung noch ein Schmiermitteldruck von 1 bis 3 bar aufrecht erhalten werden kann. Zu diesem Zweck sind an jeder der Lagerschalen druckfeste Dichtungen (Seite 9, Ende erster Absatz) vorgesehen. Mit einem Druckschalter kann festgestellt werden, ob im Schmierkreislauf zu wenig Druck ist. Es geht dort um hydraulisch angetriebene oder Hybridmaschinen, bei denen Öl, das von Hydraulikzylindern bei deren Betrieb verlustig geht, dem Schmiermittelkreislauf zugeführt wird. Damit geht es dort um eine Rückgewinnung, jedoch nicht um das Schmieren von Schmierstellen.

### Aufgabe der Erfindung

Ausgehend von diesem Stand der Technik liegt der Erfindung die Aufgabe zugrunde, eine Spritzgießmaschine der eingangs genannten Gattung derart weiterzubilden, dass überschüssiges Schmiermittel, das zum Schmieren und/oder Kühlen verwendet wird, gezielt abgeführt wird.

Diese Aufgabe wird durch eine Spritzgießmaschine mit den Merkmalen des Anspruches 1 gelöst.

Im Bereich der Schmierstelle werden hierzu Anschlüsse vorgesehen, die es einem Unterdruckerzeuger ermöglichen im Bereich der Schmierstelle einen Unterdruck zu erzeugen. Dies setzt andererseits voraus, dass die Schmierstelle nicht so dicht ist, dass das Schmiermittel gar nicht in Fluss kommen kann. Aus diesem Grund ist eine offene Verbindung der Schmierstelle mit der Umwelt vorgesehen, also abweichend vom bekannten Stand der Technik die Schmierstelle eben nicht weitestgehend abgedichtet. Vorzugsweise ist dazu ein entsprechender Spalt vorgesehen, über den Luft in den zu schmierenden Bereich einströmen kann. Dadurch kann der Unterdruckerzeuger den Unterdruck zum Absaugen überschüssigen Schmiermittels aufbringen. Indem die Schmierstelle leicht unter Unterdruck steht, ist dennoch gewährleistet, dass keine Leckage an der Schmierstelle entsteht, also kein Schmiermittel nach außen gelangt.

Beim Abdichten von Schmierstellen mit Dichtungen verschleißen die Dichtungen im Laufe der Zeit und es tritt trotzdem eine gewisse Leckage auf, was einen Austausch der Dichtung erforderlich macht. Durch das Absaugen über einen gezielten Spalt im Bereich der Lagerstelle lässt sich der Austritt des Schmiermittels durch einen Venturieffekt ebenso vermeiden wie eine übermäßige Belastung der Dichtungen. Insgesamt wird das System an sich also langlebig.

Grundsätzlich kann eine derartige Schmiermittelabführung an allen Schmierstellen im Bereich einer Spritzgießmaschine eingesetzt werden. Bevorzugte Einsatzbereiche sind insbesondere die Gelenke von Kniehebeln aber auch Schmierstellen im Bereich von Spindelantrieben. Aufgrund der geometrischen Oberfläche der Spindeln lassen sich diese Bereiche meist nur schwer abdichten, so dass es auch hierzu einem Austritt von Schmiermittel an den Spindeln kommen kann, was durch den Unterdruckerzeuger in Verbindung mit dem Venturieffekt vermieden werden kann.

Hinzu kommt in diesem Fall allerdings auch der Vorteil, dass durch entsprechenden Unterdruck und gleichzeitige Zuführung über einen Schmiermittelkreislauf das Schmiermittel zudem zur Kühlung verwendet werden kann. An den ineinandergreifenden Komponenten eines Spindelantriebes entsteht regelmäßig, insbesondere bei Kraftübertragung Wärme, die möglichst abgeführt werden muss. Wird hier nun Schmiermittel in Umlauf gebracht, das gleichzeitig vorzugsweise auch gekühlt wird, wird nicht nur der Austritt von Schmiermittel vermieden, sondern es erfolgt gleichzeitig eine effiziente Kühlung. Effizient ist diese Kühlung deshalb, da die Wärme genau an der Stelle, an welcher sie entsteht, d.h. an der Wirkstelle zwischen den mechanisch ineinandergreifenden Komponenten, abgeführt wird. Dies ist insbesondere bei hochbelasteten Spindelantrieben von Formschließeinheiten und Spritzgießeinheiten an Spritzgießmaschinen der Fall.

Vorteilhafterweise kann im Bereich der Schmierstelle ein vorgefertigtes Bauteil angebracht werden, in das zumindest die Anschlüsse für die Schmiermittelzuführung und der Anschluss für den Unterdruckerzeuger und auf geeignete Weise ein Luftspalt oder ein für eine Luftzufuhr ausreichendes Spiel integriert sind. Dies trägt zur Montagevereinfachung bei.

Weitere Vorteile ergeben sich aus den Unteransprüchen und der nachfolgenden Beschreibung bevorzugte Ausführungsbeispiele.

### Kurzbeschreibung der Figuren

Im Folgenden wird die Erfindung anhand von in den Figuren darstellten Ausführungsbeispielen näher erläutert. Es zeigen:
- Fig. 1: eine dreidimensionale Seitenansicht einer Spritzgießmaschine mit Formschließeinheit und Spritzgießeinheit,
- Fig. 2: eine schematische, teilweise geschnittene Ansicht einer Kniehebelschmierung,
- Fig. 2a: einen vergrößerten Ausschnitt aus Fig. 2 im Bereich von Luftspalt und Dichtung,
- Fig. 3, 3a: eine im Schmiermittelkreislauf eingebundene und am Kniehebelgelenk integrierte Buchse mit den zugehörigen Anschlüssen im Schnitt und in einer dreidimensionalen, teilweise geschnittenen Ansicht,
- Fig. 4: eine schematische, teilweise geschnittene Ansicht einer Spindelschmierung mit Kühlung,
- Fig. 5: eine Darstellung gemäß Fig. 4 mit einem passiven Kühlrücklauf.

### Beschreibung bevorzugter Ausführungsbeispiele

Bevor die Erfindung im Detail beschrieben wird, ist darauf hinzuweisen, dass sie nicht auf die jeweiligen Bauteile der Vorrichtung sowie die jeweiligen Verfahrensschritte beschränkt ist, da diese Bauteile und Verfahren variieren können. Die hier verwendeten Begriffe sind lediglich dafür bestimmt, besondere Ausführungsformen zu beschreiben und werden nicht einschränkend verwendet. Wenn zudem in der Beschreibung oder in den Ansprüchen die Einzahl oder unbestimmte Artikel verwendet werden, bezieht sich dies auch auf die Mehrzahl dieser Elemente, solange nicht der Gesamtzusammenhang eindeutig etwas Anderes deutlich macht.

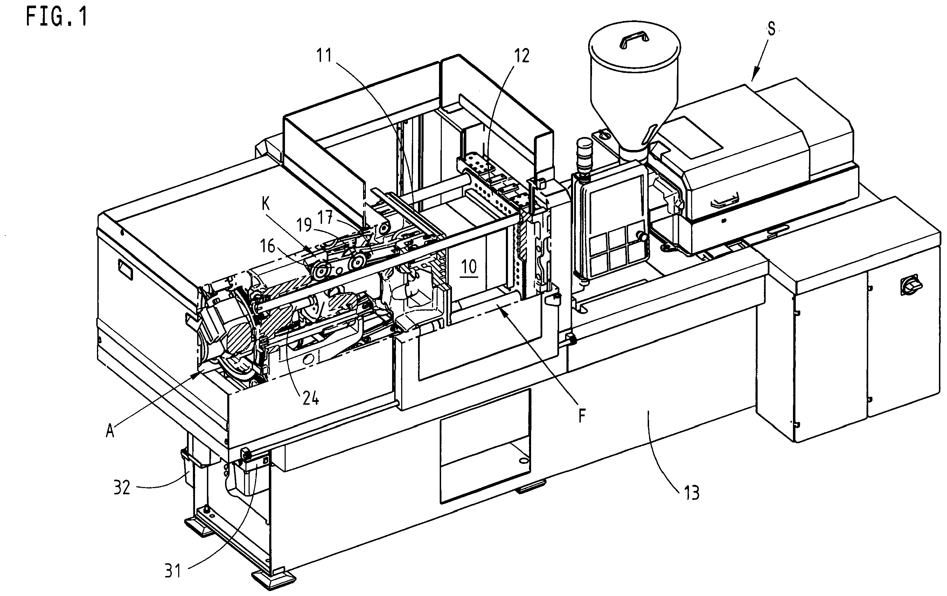

Figur 1 zeigt den grundsätzlichen Aufbau einer Spritzgießmaschine zur Bearbeitung von Kunststoffen und anderer plastifizierbarer Massen wie pulverige, metallische oder keramische Massen, die mehrere Schmierstellen 20 aufweist. Wie bei einer Spritzgießmaschine üblich, sind auf einem Maschinenfuß 13 eine Formschließeinheit F und eine Spritzgießeinheit S vorgesehen. Zwischen den Formträgern, nämlich einem stationären Formträger 12 und einem beweglichen Formträger 11, kann wenigstens eine Spritzgießform 10 bestehend aus mehreren Teilen aufgenommen werden. Die Spritzgießeinheit S bereitet die plastifizierbare Masse auf und spritzt sie zyklisch in die Spritzgießform ein. Mittels der Formschließeinheit F wird die Spritzgießform 10 zyklisch geschlossen und nach Abkühlen des eingespritzten Materials geöffnet, um die Spritzteile zu entnehmen. Der Betrieb der Spritzgießeinheit erfolgt über mehrere Antriebseinheiten A, die im Ausführungsbeispiel an einem Kniehebelmechanismus K und an z.B. einer Einspritzeinheit oder Dosiereinheit der Spritzgießeinheit vorgesehen sind.

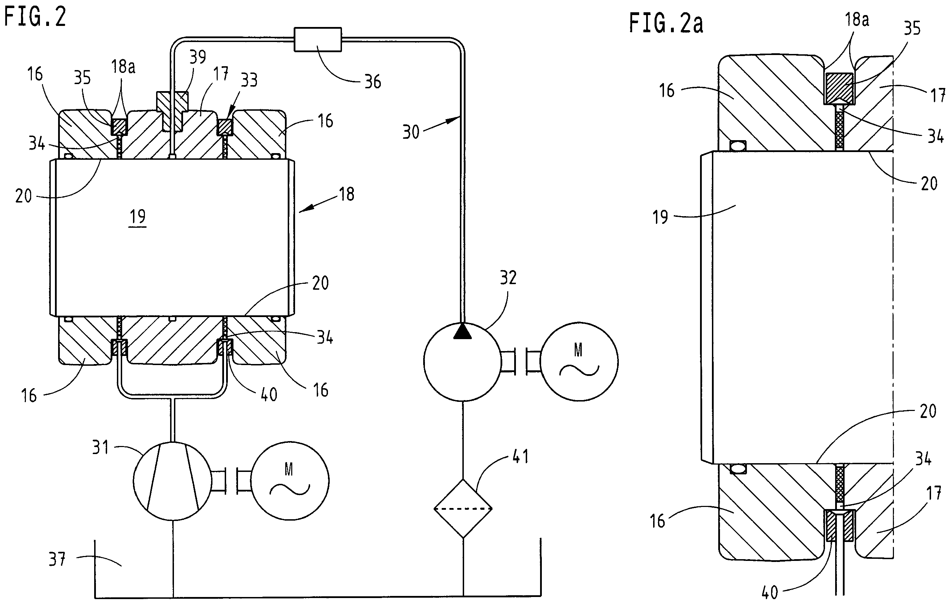

Grundsätzlich liegen bei einer derartigen Spritzgießmaschine regelmäßig Schmierstellen 20 vor, an denen die von den Antriebseinheiten A angetriebenen Komponenten mechanisch zusammenwirken und relativ zueinander beweglich sind. Diese Schmierstellen sind mit einem Schmiermittel wie z.B. einem geeigneten Öl versorgt oder versorgbar. Die Figuren 2 bis 5 zeigen Beispiele für derartige Schmierstellen, an Hand eines Gelenks 18 eines Kniehebels und an Hand eines Spindelantriebs. Andere Schmierstellen, an denen Komponenten der Spritzgießmaschine mechanisch zusammenwirken, sind dem Fachmann jedoch geläufig, so dass keine Beschränkung auf die beiden zeichnerisch dargestellten Beispiele erfolgt und diese nur beispielhafte Ausgestaltungen zeigen.

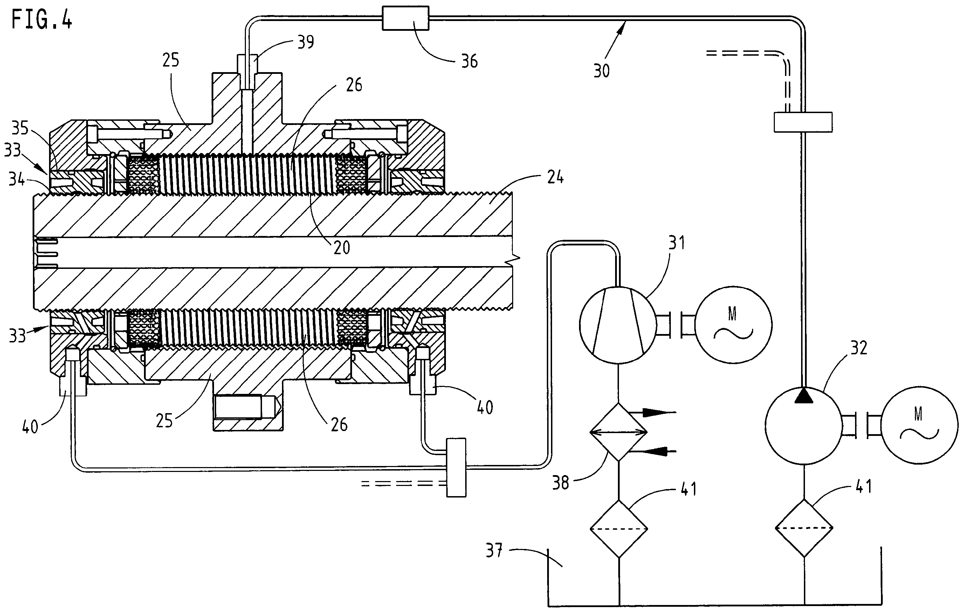

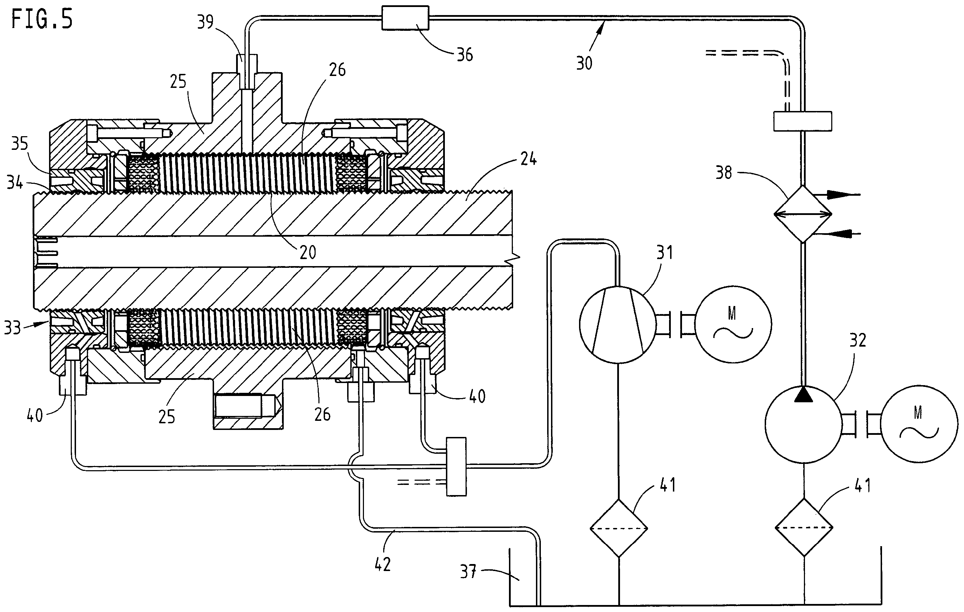

Gemäß den Figuren 2 bis 5 befinden sich im Bereich der Schmierstelle die mechanisch zusammenwirkenden Komponenten. Diese stehen an voneinander beabstandeten Stellen einerseits mit der Umwelt in offener Verbindung und andererseits mit einem Unterdruckerzeuger in Verbindung. Mit anderen Worten können die Komponenten entsprechende Anschlüsse aufweisen, es ist jedoch ebenso möglich, dass im Bereich der Lagerung dieser Komponenten entsprechende Anschlüsse vorgesehen sind. Das Schmiermittel wird über einen Schmiermittelkreislauf 30 der Schmierstelle 20 zugeführt. Im Schmiermittelkreislauf ist ein Schmiermittelbehälter 37 vorgesehen, aus dem meist über einen Filter 41 mittels einer Schmiermittelpumpe 32 das Schmiermittel gefördert wird. Dieses Schmiermittel kann über den Kreislauf nun einer Schmierstelle 20 oder auch mehreren Schmierstellen zugeführt werden, was durch die in Fig. 4 und 5 gestrichelt angedeuteten Leitungen verdeutlicht wird. Dabei können Druck und Menge des Schmiermittels je Schmierstelle dosiert werden, wozu in den Zuführleitungen Dosiereinrichtungen 36 vorgesehen sind.

Das Schmiermittel wird dann z.B. in Fig. 2 dem dort dargestellten Gelenk 18 bzw. Lagerbolzen 19 eines Kniehebelgelenks eines Kniehebelmechanismus K über die Schmiermittelzuführung 39 zugeführt, an dem die Kniehebel 16, 17 angelenkt sind. Das Schmiermittel gelangt dort an den Lagerbolzen 19 und von dort in die Spalte zwischen den Wangen 18a des Gelenks 18. Dieser Bereich steht nun einerseits über das Trennsystem 33 mit der Umgebung in offener Verbindung. Dieses Trennsystem 33 ist gemäß Fig. 2a so aufgebaut, dass des es einerseits das Schmiermittel an der Schmierstelle 20 hält, andererseits aber einen Luftzutritt in Form eines Luftspalts 34 zur Schmierstelle 20 aufweist. Dieser Luftspalt 34 kann im Bereich einer Dichtung 35 vorgesehen sein.

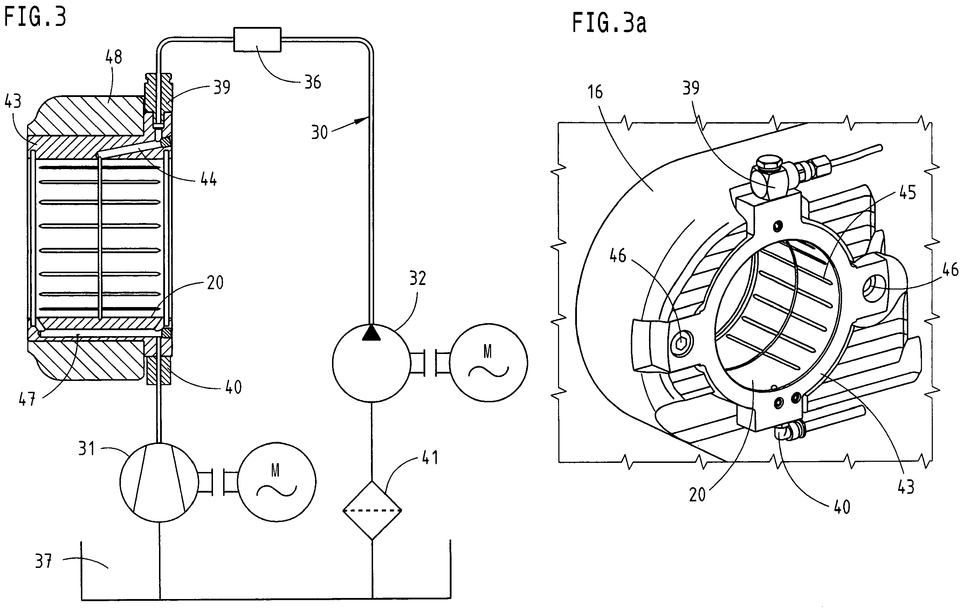

Das Gelenk 18 weist vorzugsweise auf der der Schmiermittelzuführung 39 gegenüberliegenden Seite Anschlüsse 40 für einen Unterdruckerzeuger 31 auf, der je nach Menge und Unterdruck überschüssiges Schmiermittel wieder in den Schmiermittelbehälter 37 absaugt. Um dieses Absaugen zu ermöglichen, ist es erforderlich, dass entsprechende Luftspalte 34 vorgesehen sind, damit überhaupt ein Fluss an überschüssigem Schmiermittel entstehen kann. Es wird also der Weg gewählt, nicht so gut wie möglich die Schmierstelle abzudichten, sondern sie bewusst über eine Spaltdichtung offen zu lassen, damit Schmiermittel in Verbindung mit dem Venturieffekt abgesaugt werden kann. Die Figuren 3, 3a zeigen ein weiteres Ausführungsbeispiel, wobei in diesem Ausführungsbeispiel mit dem ersten Ausführungsbeispiel identische Teile mit identischen Bezugszeichen versehen sind. Eine Buchse 43 ist dabei im Bereich eines Kniegelenks, wobei in dieser Buchse im montierten Betriebszustand ein zeichnerisch nicht dargestellter Gelenkbolzen 19 aufgenommen ist. Die Buchse 43 ist im Schmiermittelkreislauf eingebunden und weist alle zugehörigen Anschlüsse wie den Anschluss für die Schmiermittelzuführung 39 und den Anschluss 40 für den Unterdruckerzeuger 31 bereits vormontiert auf, was zur Montagevereinfachung beiträgt, da nur noch die Buchse 43 mittels Befestigungsmittel 46 am Lagerflansch 48 der Kniehebel montiert werden muss. Gegenüber dem ersten Ausführungsbeispiel sind die Anschlüsse seitlich nach außen versetzt, was aus Montagegründen gemäß Fig. 3a praktischer ist. Das Schmiermittel gelangt über entsprechende Bohrungen 44 als Schmiermittelzufuhr und Vertiefungen 45 als Schmierritzen zur Schmierstelle und kann über die Bohrung 47 wieder mittels des Unterdruckerzeugers 31 abgeführt werden. Der Luftspalt 34 wird wie im ersten Ausführungsbeispiel zwischen den Kniehebeln und dem Gelenkbolzen gebildet. Entsprechend vorgefertigte Bauteile wie die Buchse 43 sind auch an anderen Schmierstellen in analoger Weise einsetzbar.

Die Fig. 4 und 5 zeigen eine andere Schmierstelle 20 und zwar im Bereich eines Spindelantriebes, wie er an Spritzgießmaschinen sowohl formschließseitig als auch spritzgießseitig verwendet wird. Der Spindelantrieb weist im Ausführungsbeispiel außer der Spindel 24 und der Spindelmutter 25 damit zusammenwirkende Planeten 26 auf. Wie im Fall der Schmierstelle 20 gemäß Fig. 2 ist auch hier ein Schmiermittelkreislauf 30 vorgesehen, wobei aus dem Schmiermittelbehälter 37 über Filter 41 mit der Schmiermittelpumpe 32 Schmiermittel verschiedenen Schmierstellen 20 zugeführt wird. Vor der Schmiermittelzuführung 39 ist eine Dosiereinrichtung 36 angeordnet, um die zugeführte Menge zu dosieren. Auf der der Schmiermittelzuführung 39 gegenüberliegenden Seite sind die Anschlüsse 40 für den Unterdruckerzeuger 31 vorgesehen, über den überschüssiges Schmiermittel abgeführt werden kann und dann über den Filter 41 dem Schmiermittelbehälter 37 zugeführt wird.

Im Ausführungsbeispiel der Figuren 4 und 5 ist ein Schmiermittelkühler 38 vorgesehen. Denn grundsätzlich kann nicht nur überschüssiges Schmiermittel abgeführt, sondern der Schmiermittelkreislauf 30 auch dazu genutzt werden, dass eine bestimmte Menge an Schmiermittel in Umlauf gebracht wird. Dieses Schmiermittel kann über den Schmiermittelkühler 38 gleichzeitig gekühlt werden, wobei eine derartige Kühlung gerade bei einem Spindelantrieb sehr effizient ist. Gemäß Fig. 4, 5 wird nämlich das Schmiermittel genau der Stelle zugeführt, an der die Reibung entsteht, d.h. auch genau dort, wo Wärme anfällt. Diese Wärme fällt insbesondere bei Kraftübertragung an der Schmierstelle 20 an. Dies ist bei hochbelasteten Spindeln der Formschließeinheit als auch der Spritzgießeinheit der Fall. In den Fig. 4 und 5 erfolgt die Schmiermittelzuführung und -abführung quer zur Spindel 24 und vorzugsweise über die Mutter 25. Die offene Verbindung zur Umwelt erfolgt über das Trennsystem 33, das parallel zur Spindel 24 und im Ausführungsbeispiel entlang der Spindel vorgesehen ist und dort den Luftspalt 34 an der Dichtung 35 ausbildet.

Die Ver- und Entsorgung der Schmierstellen 20 erfolgt unabhängig voneinander, wobei die Schmierstellen über die Dosiereinrichtung 36 mit der gewünschten Menge und über den Unterdruck des Unterdruckerzeugers 31 mit dem gewünschten Druck individuell bedient werden können. Dadurch können auch mehrere Schmierstellen 20 parallel und ganz nach Bedarf bedient werden.

Fig. 5 zeigt in einer weiteren Ausführungsform noch den Kühlrücklauf 42, über den anfallendes Schmiermittel auch als Kühlmittel und unabhängig vom Unterdruck passiv zurück in den Schmiermittelbehälter 37 gelangen kann.

### Bezugszeichenliste

- 10: Spritzgießform
- 11: beweglicher Formträger
- 12: stationärer Formträger
- 13: Maschinenfuß
- 16, 17: Kniehebel
- 18: Gelenk
- 18a: Wange
- 19: Lagerbolzen
- 20: Schmierstelle
- 24: Spindel
- 25: Spindelmutter
- 26: Planeten
- 30: Schmiermittelkreislauf
- 31: Unterdruckerzeuger
- 32: Schmiermittelpumpe
- 33: Trennsystem
- 34: Luftspalt
- 35: Dichtung
- 36: Dosiereinrichtung
- 37: Schmiermittelbehälter
- 38: Schmiermittelkühler
- 39: Schmiermittelzuführung
- 40: Anschluss zu 31
- 41: Filter
- 42: Kühlrücklauf
- 43: Buchse
- 44: Bohrung für Schmiermittelzufuhr
- 45: Vertiefungen
- 46: Befestigungsmittel
- 47: Bohrung für Schmiermittelabfuhr
- 48: Lagerflansch
- A, A': Antriebseinheit
- F: Formschließeinheit
- K: Kniehebelmechanismus
- S: Spritzgießeinheit

## Patentansprüche

1. Spritzgießmaschine zur Verarbeitung von Kunststoffen und anderer plastifizierbarer Materialen wie pulverförmige, metallische oder keramische Massen mit
- wenigstens einer Formschließeinheit (F),
- wenigstens einer Spritzgießeinheit (S),
- mehreren Antriebseinheiten (A) zum Betrieb von Formschließeinheit (F) und Spritzgießeinheit (S), welche Antriebseinheiten an wenigstens einer Schmierstelle (20) mechanisch zusammenwirkende, relativ zueinander bewegliche Komponenten aufweisen, die mit einem Schmiermittel zu versorgen sind,
wobei die Komponenten im Bereich der Schmierstelle (20) an voneinander beabstandeten Stellen einerseits mit der Umwelt in offener Verbindung stehen und andererseits mit einem Unterdruckerzeuger (31) verbunden sind,
**dadurch gekennzeichnet, dass** zur Versorgung der Schmierstelle (20) mit Schmiermittel ein offener Schmiermittelkreislauf (30) vorgesehen ist, der eine Schmiermittelpumpe (32) und den mit der Schmierstelle verbundenen Unterdruckerzeuger (31) umfasst, über den überschüssiges Schmiermittel abgeführt wird.

2. Spritzgießmaschine nach Anspruch 1, **dadurch gekennzeichnet, dass** an der offenen Verbindung zur Umwelt ein das Schmiermittel an der Schmierstelle (20) haltendes Trennsystem (33) mit einem Luftzutritt zur Schmierstelle (20) vorgesehen ist.

3. Spritzgießmaschine nach Anspruch 1 oder 2, **dadurch gekennzeichnet, dass** die offene Verbindung zur Umwelt durch einen Luftspalt (34), vorzugsweise im Bereich einer Dichtung (35) gebildet ist.

4. Spritzgießmaschine nach einem der vorhergehenden Ansprüche, **dadurch gekennzeichnet, dass** im Schmiermittelkreislauf ein Schmiermittelkühler (38) und/oder stromaufwärts vor der Schmierstelle (20) eine Dosiereinrichtung (36) für das Schmiermittel vorgesehen ist.

5. Spritzgießmaschine nach einem der vorhergehenden Ansprüche, **dadurch gekennzeichnet, dass** die Komponenten die Kniehebel (16, 17) eines Kniehebelmechanismus (K) sind, die an einem die Schmierstelle (20) aufweisenden Gelenk (18) miteinander verbunden sind.

6. Spritzgießmaschine nach Anspruch 5, **dadurch gekennzeichnet, dass** die Schmierstelle (20) an den aneinander liegenden Wangen (18a) des Gelenks (18) mit dem Unterdruckerzeuger (31) verbunden ist.

7. Spritzgießmaschine nach einem der Ansprüche 1 bis 4, **dadurch gekennzeichnet, dass** die Komponenten Spindelmutter (25) und Spindel (24) eines Spindelantriebs umfassen, wobei die Schmierstelle (20) im Bereich der ineinandergreifenden Komponenten vorgesehen ist.

8. Spritzgießmaschine nach Anspruch 7, **dadurch gekennzeichnet, dass** die offene Verbindung zur Umwelt entlang der Spindel (24) vorgesehen ist.

9. Spritzgießmaschine nach einem der Ansprüche 7 oder 8, **dadurch gekennzeichnet, dass** die Schmiermittelzuführung (39) und die Verbindung zum Unterdruckerzeuger (20) quer zur Spindel (24) angeordnet sind.

10. Spritzgießmaschine nach einem der vorhergehenden Ansprüche, **dadurch gekennzeichnet, dass** an der Schmierstelle ein vorgefertigtes Bauteil (43) vorgesehen ist, in das zumindest die Anschlüsse für die Schmiermittelzuführung (39) und der Anschluss (40) für den Unterdruckerzeuger (31 integriert sind.

## Claims

1. Injection moulding machine for processing plastics and other plasticizable materials such as powdered, metallic or ceramic compositions, having
- at least one mould closing unit (F),
- at least one injection moulding unit (S),
- a plurality of actuating units (A) for the operation of the mould closing unit (F) and the injection moulding unit (S), which actuating units comprise, at least at one lubrication site (20), mechanically cooperating components which are movable relative to one another and which are to be supplied with a lubricant,
wherein the components are connected in the region of the lubrication site (20) at mutually spaced sites, firstly, to the surroundings in an open connection and, secondly, to a negative pressure generator (31),
**characterised in that** in order to supply the lubrication site (20) with lubricant, an open lubricant circuit (30) is provided which comprises a lubricant pump (32) and the negative pressure generator (31) which is connected to the lubrication site and by means of which the excess lubricant is conducted away.

2. Injection moulding machine according to claim 1, **characterised in that** at the open connection to the surroundings, a separating system (33) retaining the lubricant at the lubrication site (20) is provided with an air access to the lubrication site (20).

3. Injection moulding machine according to claim 1 or 2, **characterised in that** the open connection to the surroundings is formed by an air gap (34), preferably in the region of a seal (35).

4. Injection moulding machine according to one of the preceding claims, **characterised in that**, in the lubricant circuit a lubricant cooler (38) and/or upstream before the lubrication site (20), a dosing device (36) for the lubricant is provided.

5. Injection moulding machine according to one of the preceding claims, **characterised in that** the components are the toggle units (16, 17) of a toggle mechanism (K), which are connected to one another at a joint (18) comprising the lubrication site (20).

6. Injection moulding machine according to claim 5, **characterised in that** the lubrication site (20) is connected to the negative pressure generator (31) at the mutually adjacent cheeks (18a) of the joint (18).

7. Injection moulding machine as claimed in one of the claims 1 to 4, **characterised in that** the components comprise the spindle nut (25) and the spindle (24) of a spindle drive, wherein the lubrication site (20) is provided in the region of the interengaging components.

8. Injection moulding machine according to claim 7, **characterised in that** the open connection to the surroundings is provided along the spindle (24).

9. Injection moulding machine according to one of the claims 7 or 8, **characterised in that** the lubricant feed (39) and the connection to the negative pressure generator (20) are arranged transversely to the spindle (24).

10. Injection moulding machine according to one of the preceding claims, **characterised in that** provided at the lubrication site is a pre-fabricated component (43) into which at least the connections for the lubricant feed (39) and the connection (40) for the negative pressure generator (31) are integrated.

## Revendications

1. Machine de moulage par injection pour le traitement de matières plastiques et d'autres matériaux plastifiables comme des masses pulvérulentes, métalliques ou céramiques comportant
- au moins une unité de fermeture de moule (F),
- au moins une unité de moulage par injection (S),
- plusieurs unités de commande (A) pour la commande de l'unité de fermeture de moule (F) et l'unité de moulage par injection (S), lesquelles unités de commande présentent à au moins un point de lubrification (20), des composants fonctionnant ensemble mécaniquement, déplaçables les uns par rapport aux autres, qui peuvent être alimentés avec un moyen de lubrification,
dans lequel les composant sont en liaison ouverte vers l'extérieur à des endroits espacés les uns des autres dans la zone du point de lubrification (20) et sont par ailleurs reliés à un créateur de dépression (31),
**caractérisé en ce que**, pour l'approvisionnement du point de lubrification (20) avec le moyen de lubrification, il est prévu un circuit ouvert de moyen de lubrification (30) qui comprend une pompe pour moyen de lubrification (32) et le créateur de dépression (31) relié au point de lubrification, grâce auquel le moyen de lubrification en excès est évacué.

2. Machine de moulage par injection selon la revendication 1, **caractérisé en ce qu'**au niveau de la liaison ouverte vers l'extérieur, un système de séparation supportant le moyen de lubrification au niveau du point de lubrification (20) est prévu avec un passage d'air vers le point de lubrification (20).

3. Machine de moulage par injection selon la revendication 1 ou 2, **caractérisée** en que la liaison ouverte vers l'extérieur est formée par une fente laissant passer l'air (34), de préférence dans la zone d'un joint (35).

4. Machine de moulage par injection selon l'une des revendications précédentes, **caractérisée en ce qu'**il est prévu pour le moyen de lubrification dans le circuit de moyen de lubrification un refroidisseur de moyen de lubrification (38) et/ou en amont des emplacements de lubrification (20) un dispositif de dosage (36).

5. Machine de moulage par injection selon l'une des revendications précédentes, **caractérisée en ce que** les composants sont les genouillères (16, 17) d'un mécanisme à genouillères (K), lesquelles sont reliées ensemble à une articulation (18) présentant le point de lubrification.

6. Machine de moulage par injection selon la revendication 5, **caractérisée en ce que** le point de lubrification (20) est relié au créateur de dépression (31) au niveau des parois latérales de l'articulation situées les unes à côté des autres (18a).

7. Machine de moulage par injection selon l'une des revendications 1 à 4, **caractérisée en ce que** les composants comprennent un écrou de broche (25) et une broche (24) d'un entraînement à broche, le point de lubrification (20) étant prévu dans la zone des composants venant en prise les uns avec les autres.

8. Machine de moulage par injection selon la revendication 7, **caractérisée en ce que** la liaison ouverte vers l'extérieur est prévue le long de la broche (24).

9. Machine de moulage par injection selon les revendications 7 ou 8, **caractérisée en ce que** la conduite du moyen de lubrification (39) et la liaison avec le créateur de dépression (20) sont disposés perpendiculairement à la broche (24).

10. Machine de moulage par injection selon l'une des revendications précédentes, **caractérisée en ce qu'**il est prévu au point de lubrification une pièce préfabriquée (43), dans laquelle au moins les connexions pour la conduite de moyen de lubrification (39) et la connexion (40) pour le créateur de dépression (31) sont intégrées.
